# EUROPÄISCHE PATENTSCHRIFT

(11) **EP 2 106 561 B1**
(45) Veröffentlichungstag und Bekanntmachung des Hinweises auf die Patenterteilung: **01.02.2012**
(21) Anmeldenummer: 07856982.9
(22) Anmeldetag: 20.12.2007
(51) Int. Cl.: G02B 6/36

(54) **MEHRKANALIGER OPTISCHER DREHÜBERTRAGER MIT HOHER RÜCKFLUSSDÄMPFUNG**
MULTICHANNEL OPTICAL ROTARY JOINT WITH HIGH RETURN LOSS
JOINT OPTIQUE TOURNANT MULTICANAUX A AFFAIBLISSEMENT MARQUE DE PERTES PAR REFLEXION

(30) Priorität: 22.12.2006 DE 102006062335; 20.03.2007 DE 102007013923
(43) Veröffentlichungstag der Anmeldung: 07.10.2009
(73) Patentinhaber: Schleifring und Apparatebau GmbH, 82256 Fürstenfeldbruck (DE)
(72) Erfinder: POPP, Gregor, 80636 München (DE); BRAÜ, Josef, 81245 München (DE); RANK, Matthias, 93497 Wilmering (DE)
(74) Vertreter: Lohr, Georg
(86) Internationale Anmeldenummer: PCT/EP2007/011259
(87) Internationale Veröffentlichungsnummer: WO 2008/077579

(56) Entgegenhaltungen:
- JP-A- 63 208 821
- US-A- 4 872 737
- US-A1- 2005 036 735

## Beschreibung

### Technisches Gebiet

Die Erfindung betrifft eine Vorrichtung zur Übertragung optischer Signale zwischen gegeneinander drehbaren Einheiten, auch Drehkupplung oder Drehübertrager genannt. Dabei sollen mehrere optische Signale in mehreren Kanälen gleichzeitig übertragen werden.

### Stand der Technik

Zur Übertragung optischer Signale zwischen gegeneinander drehbaren Einheiten sind verschiedene Übertragungssysteme bekannt.

In der US 5,568,578 ist ein optischer Drehübertrager für mehrere Kanäle mit einem Dove-Prisma offenbart. Zur Einkopplung beziehungsweise Auskopplung des Lichtes aus Glasfasern ist eine Anordnung mit mehreren GRIN-Linsen vorgesehen. An die Lichteintrittsflächen des Dove-Prismas wird das Licht entsprechend der Brechzahlen des Glases des Dove-Prismas und der Umgebung gebrochen. Die Funktion des Prismas ist also von der Brechzahl eines das Prisma umgebenden Mediums abhängig.

In der US 2005/0036735 ist ein optischer Drehübertrager für mehrere Kanäle mit einem Dove-Prisma als derotierendes Element offenbart. Licht wird von zuführenden Lichtwellenleitern über Kollimatoren in ein Dove-Prisma eingekoppelt, mittels diesem derotiert und über weitere Kollimatoren in wegführende Lichtwellenleiter eingespeist. Um die Anordnung unabhängig von der Brechzahl eines Mediums im Umfeld des Dove-Prismas zu machen, wird das Prisma mit Vorsatzstücken versehen, die für einen senkrechten Lichteintritt sorgen. Durch diesen senkrechten Lichteintritt tritt keine Brechung an der Übergangsfläche auf. Nachteilig daran ist die teilweise Reflexion des Lichts an der senkrechten Übergangs Fläche, so dass zumindest ein Teil des Lichts wieder in den Lichtleiter eingekoppelt wird. Hieraus ergibt sich eine relativ geringe Rückflussdämpfung.

Eine andere Art eines optischen Drehübertragers ist in der WO 01/98801 A2 offenbart. So ist darin ein mikrooptisches System angegeben, welches optische und mechanische Komponenten als einstückiges Bauteil aufweist. Durch diese Ausgestaltung lässt sich eine wesentlich höhere Packungsdichte der einzelnen Glasfasern erreichen. Nachteilig an sind ebenfalls wieder die parallelen Lichteintritts- und Lichtaustrittsflächen, die eine relativ geringe Rückflussdämpfung bewirken.

Nachteilig an dem bekannten Stand der Technik ist, dass im inneren der Drehübertrager relativ starke Reflexionen des übertragenen Lichtes auftreten.

### Darstellung der Erfindung

Der Erfindung liegt die Aufgabe zugrunde, einen Drehübertrager zur Mehrkanal-Übertragung optischer Signale zu verbessern und insbesondere derart auszugestalten, dass die optische Rückflußdämpfung der Anordnung verbessert wird.

Erfindungsgemäße Lösungen dieser Aufgabe sind in den unabhängigen Patentansprüchen angegeben. Weiterbildungen der Erfindung sind Gegenstand der abhängigen Ansprüche.

Die erfindungsgemäße Vorrichtung weist zwei Kollimatoranordnungen 4, 5 auf, welche um eine Drehachse 6 gegeneinander drehbar angeordnet sind. Zwischen der ersten Kollimatoranordnung 5 und der gegenüber dieser drehbar angeordneten zweiten Kollimatoranordnung 6 besteht ein optischer Pfad zur Übertragung von Licht. In diesem optischen Pfad befindet sich wenigstens ein derotierendes Element, beispielsweise ein Dove-Prisma 1, welches für eine Abbildung des von der ersten Kollimatoranordnung 4 ausgesendeten Lichtes auf die zweiten Kollimatoranordnung 5, ebenso auch in umgekehrter Richtung, unabhängig von der Rotationsbewegung zwischen den beiden Kollimatoren sorgt. Das Dove-Prisma wird hierzu mit der halben Winkelgeschwindigkeit der Drehung der ersten Kollimatoranordnung 5 und der zweiten Kollimatoranordnung 6 gedreht.

Jede der Kollimatoranordnungen 4, 5 umfasst wenigstens einen Kollimator sowie wenigstens ein Mittel zur Halterung des wenigstens einen Kollimators. Der Begriff Kollimator steht hier im weitesten Sinne für ein strahlführendes beziehungsweise strahlformendes Element. Die Aufgabe eines solchen Kollimators besteht in der Umsetzung des in einem Lichtwellenleiter, beispielsweise einer Singlemode-Faser oder auch einer Multimode-Faser geführten Lichtes in einen Strahlengang, welcher durch den Drehübertrager und insbesondere durch das derotierende Element geführt werden kann. Dieser entspricht einem Strahlengang im Freiraum beziehungsweise in einem optischen Medium, wie beispielsweise Glas oder Öl. Ebenso kann durch einen Kollimator auch eine Umsetzung in umgekehrter Richtung, d.h. vom Strahlengang im Drehübertrager in einen Lichtwellenleiter, erfolgen. Selbstverständlich sind innerhalb eines Kollimators auch Umsetzungen in beide Richtungen denkbar, so dass bidirektionale Signale übertragen werden können. Typischerweise sind die Kollimatoren Linsen, besonders bevorzugt Gradienten-Index-Linsen (GRIN-Linsen) .

Entsprechend der Erfindung weist jede der Kollimatoranordnungen 4, 5, wenigstens ein Anpasselement auf, welches in seiner dem Prisma zugewandte Seite wenigstens eine Rotationssymmetrische Fläche aufweist, die in einem Winkel abweichend von der Senkrechten zur Rotationsachse 6 steht. Eine solche Fläche ist vorzugsweise als Kegelfläche oder zumindest als Segment einer Kegelfläche ausgeführt. Entsprechend bildet die Fläche einen geraden Kreiskegel mit einer Höhe größer 0. Der Winkel in der Kegelspitze liegt nahe bei 180°, ohne diesen Wert zu erreichen, da dann anstelle des Kegels eine Ebene Fläche vorliegen würde, welche wiederum Reflexionen in die aussendenden Lichtwellenleiter verursachen könnte. Die Kegelfläche weist gegenüber der Rotationsachse vorzugsweise einen Winkel im Bereich von 0,1° bis 5° auf. Ein bevorzugter Winkel liegt im Bereich von 0,5 bis 1,5°. Besonders bevorzugt ist 0,9°. Der Kegel kann wahlweise in die Fläche hineinragen oder aus dieser herausragen. Entsprechend zu den Anpasselementen der Kollimatoranordnungen sind am Dove-Prisma 1 2 Prismen-Anpasselemente 11, 12 vorgesehen. Diese Prismen-Anpasselemente weisen auf ihrer dem Prisma zugewandten Seite eine Form entsprechend dem Prisma auf, so dass sie möglichst flächig an das Prisma anschließen. Auf den dem Kollimatoren zugewandten Seiten weisen die Prismen-Anpasselemente eine Oberflächengeometrie auf, die invers zu der Oberflächengeometrie der Anpasselemente der Kollimatoren ist. Bildet beispielsweise das Anpasselement der ersten Kollimatoranordnung 4 einen in Richtung des Prismas herausragenden Kegel, so ist die Fläche des zugeordneten Prismen-Anpasselements kegelförmig in das Prismen-Anpasselement hineinragend. Würde man ein Prismen Anpasselement und das zugeordnete Anpasselement eines Kollimators eng zusammenführen, so würden diese lückenlos zueinander passen.

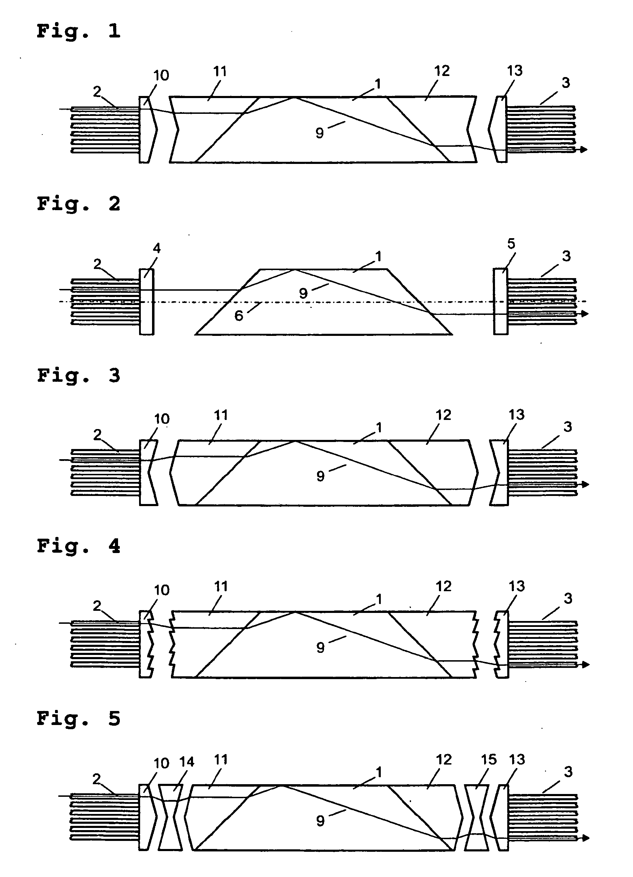

Aus der Figur 4 geht hervor, dass die Kegelmantelflächen, auch Kegelflächen genannt, sich hier immer auf ein Segment eines Kegels mit abgeschnittener Spitze beziehen, wobei die Schnittfläche parallel zur Grundfläche des Kegels und senkrecht zur Achse des Kegels verläuft. Die Achse des Kegels entspricht der Drehachse 6.

Ebenso kann eine erfindungsgemäße Anordnung auch mehrere rotationssymmetrisch angeordnete, rotationssymmetrische Flächen aufweisen. Eine solche Anordnung kann einer Fresnel-Linse ähnlich sein. Im Gegensatz zur Fresnel-Linse werden hier aber Kegelmantelflächen anstatt der Linsensegmente eingesetzt. Die einzelnen Kegelmantelflächen sind bei den Kollimatoranordnungen mit Anpasselement 10, 13 entsprechend entgegengesetzt zu den Kegelmantelflächen der Prismen-Anpasselemente 11, 12 angeordnet.

Durch eine erfindungsgemäße Anordnung werden senkrechte Oberflächen im Strahlengang vermieden. Entsprechend dem stand der Technik bestehen zumindest an den Anpasselementen senkrechte Oberflächen. Reflexionen an diesen Flächen werden dann mit hoher Genauigkeit in den gegenüberliegenden Kollimator des gleichen Strahlenganges zurück gespiegelt. Dies führt zu relativ hohen Reflexionen des eingespeisten optischen Signals. Entsprechend der Erfindung werden diese senkrechten Flächen vermieden. Damit wird an einer Fläche reflektiertes Licht nicht mehr in den gegenüberliegenden Kollimator zurückreflektiert. Gleichzeitig ist ein Funktionieren der Anordnung unabhängig von dem Medium im Innenraum des Drehübertragers gewährleistet. So kann das innere des Drehübertragers beispielsweise mit einer Flüssigkeit wie Wasser oder Öl gefüllt sein. Ebenso kann dieses ein Gas enthalten. Abhängig vom Brechungsindex des Mediums und dem Brechungsindex der Anpasselemente ergibt sich ein radialer Versatz des Lichtstrahls im Prisma gegenüber der Kollimatoranordnungen. Bei dieser Ersatz auf beiden Seiten der Anordnung, aufgrund des derotierenden Element jedoch in entgegengesetzter Richtung stattfindet, kompensiert sich dieser. Somit ergibt sich innerhalb der Kollimatoranordnung auf der ersten Seite und der Kollimatoranordnungen auf der zweiten Seite kein Vorsatz des Lichtstrahls. Voraussetzung hierfür ist, dass das Medium im inneren des Drehübertragers einen konstantem Brechungsindex aufweist. Die Anpasselemente werden vorzugsweise aus einem Glas oder aus einem Kunststoff gefertigt.

Für die Darstellung der Erfindung wird auf Kollimatoranordnungen mit Anpasselement 10 und 13 Bezug genommen. Es ist unwesentlich für die Erfindung, ob die Kollimatoranordnung mit einem entsprechenden Anpasselement als ein getrenntes Bauteil kombiniert wird, oder ob das Anpasselement bereits in die Kollimatoranordnung integriert ist.

Für die Kollimatoranordnungen mit Anpasselement 10 und 13 sind verschiedene Ausführungsformen möglich. Beispielsweise können die Kollimatoranordnungen als Mikrooptisches Element, beziehungsweise Mikrolinsenarray (MLA) ausgebildet sein. In einem solchen Fall kann wahlweise ein entsprechendes Anpasselement an dem mikrooptischen Element angebracht sein. Besonders günstig ist es jedoch, wenn das Mikrooptische Element bereits in einer entsprechenden Form ausgeführt ist.

Alternativ hierzu kann beispielsweise auch eine Kollimatoranordnung mit diskreten Kollimatoren, beispielsweise wie in der US 5,568,578 offenbart, eingesetzt werden. Es wird hierzu vor die Kollimatoranordnung ein entsprechendes Anpasselement angeordnet.

Die Erfindung ist grundsätzlich für alle derotierenden optischen Elemente ausführbar. Der Anschaulichkeit halber wird hier auf ein Dove-Prisma Bezug genommen. Ebenso ist aber auch als derotierendes Element ein Abbe-König-Prisma einsetzbar.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt in allgemeiner Form schematisch eine erfindungsgemäße Anordnung.
Figur 2 zeigt eine beispielhafte Anordnung entsprechend dem Stand der Technik.
Figur 3 zeigt eine weitere Ausführung einer erfindungsgemäßen Anordnung.
Figur 4 zeigt eine weitere Ausführung einer erfindungsgemäßen Anordnung, bei der die Anpasselemente in Form von Fresnel-Linsen ausgeführt sind.
Figur 5 zeigt eine weitere Ausführung einer erfindungsgemäßen Anordnung, bei der zusätzliche Zwischenelemente vorgesehen sind.
Figur 6 zeigt ein Detail aus Figur 4 in vergrößerter Darstellung.
Figur 7 zeigt eine Draufsicht auf die erste Kollimatoranordnung mit Anpasselement 10 aus Figur 5.

Figur 1 zeigt in schematischer Form eine erfindungsgemäße Anordnung im Schnitt längs der Drehachse 6. Der erfindungsgemäße optische Drehübertrager umfasst eine erste Kollimatoranordnung mit Anpasselement 10 zur Ankopplung von Lichtwellenleitern 2, sowie eine zweite Kollimatoranordnung mit Anpasselement 13 zur Ankopplung weiterer Lichtwellenleiter 3. Die erste Kollimatoranordnung mit Anpasselement 10 sowie die zweite Kollimatoranordnung mit Anpasselement 13 sind an ihrem zum Prisma 1 weisenden Seiten Kegelförmig ausgebildet, wobei die Kegel aus den Flächen der Kollimatoranordnungen herausragen. Entsprechend hierzu sind ein erstes Prismen-Anpasselement 11 und ein zweites Prismen-Anpasselement 12 mit dem Prisma 1 verbunden. Die zu den Kollimatoranordnungen weisenden Flächen der Prismen-Anpasselemente sind invers zu dem zugeordneten Anpasselementen der Kollimatoranordnungen ausgeführt. In diesem Falle sind kegelförmige Endflächen ausgebildet, welche nach innen in Richtung des Prismas 1 weisen. Der Strahlengang eines Lichtstrahls 9 zeigt die Funktionsweise der Anordnung anschaulich auf. Licht, welches beispielsweise durch einen der ersten Lichtwellenleiter 2 parallel zur Drehachse 6 in die Anordnung eingekoppelt wird, wird durch die erste Kollimatoranordnung mit Anpasselement 10 aufgeweitet. So kann beispielsweise Licht, welches in einer Singlemode-Faser mit einem Kerndurchmesser von 9 µm geführt wird, zu einem parallelen Lichtstrahl mit einem Durchmesser von 0,1 mm aufgeweitet werden. Dieser Lichtstrahl tritt nun aus der ersten Kollimatoranordnung mit Anpasselement in den Innenraum des Drehübertragers ein. Dieser ist beispielsweise mit einem Öl mit niedrigerem Brechungsindex, verglichen mit dem Brechungsindex der ersten Kollimatoranordnung mit Anpasselement 10 gefüllt. Die erste Kollimatoranordnung mit Anpasselement 10 weist eine Kegelförmige Kontur auf, wobei die Kegelfläche derart orientiert ist, dass die Spitze des Kegels in Richtung des Dove-Prismas 1 zeigt. Aufgrund des niedrigeren Brechungsindex wird der Lichtstrahl radial nach innen, das heißt in unserer Schnitt-Darstellung nach unten abgelenkt. Der Lichtstrahl tritt nun etwas weiter innen, das heißt in unsere Darstellung etwas weiter unten in das erste Prismen-Anpasselement 11 mit höherem Brechungsindex ein und wird entsprechend abgelenkt. Die neue Richtung des Lichtstrahls ist nun parallel zur ursprünglichen Richtung in der ersten Kollimatoranordnung, jedoch radial nach innen beziehungsweise in unserer Darstellung nach unten versetzt. Der optische Effekt der Anordnung entspricht demjenigen einer planparallelen Platte. Die Umlenkung des Strahls im Dove-Prisma ist aus dem Stand der Technik bekannt. Die Brechung des Strahls beim Eintritt in das Prisma wird durch das Verhältnis der Brechungsindizes des Prismen-Anpasselement 11 und des Dove-Prismas 1 selbst bestimmt. Im vorliegenden Beispiel hat das Dove-Prisma einen niedrigeren Brechungsindex als das erste Prismen-Anpasselement 11. Ebenso wäre selbstverständlich ein Dove-Prisma mit höherem Brechungsindex einsetzbar. In diesem Falle würde das Licht beim Eintritt in das Prisma durch Brechung nach der anderen Seite abgelenkt werden. Nach dem Durchtritt durch das Dove-Prisma 1 wird der Lichtstrahl beim Übergang in das zweite Prismen-Anpasselement wieder entsprechend der Brechungsindex-Verhältnisse gebrochen. Der Lichtstrahl verläuft nun im zweiten Prismen-Anpasselement 12 wieder parallel zum Strahlengang im ersten Prismen-Anpasselement 11 und somit parallel zur Drehachse 6, jedoch entsprechend der Abbildungsfunktion des Dove-Prismas 1 versetzt. Beim Austritt aus dem zweiten Prismen-Anpasselement 12 in den Innenraum des Drehübertragers, der mit Öl mit einem niedrigeren Brechungsindex gefüllt ist, wird das Licht in radialer Richtung nach aussen, das heißt in der Schnitt-Zeichnung nach unten abgelenkt. Beim erneuten Eintritt in ein Medium mit höherem Brechungsindex, der zweiten Kollimatoranordnung mit Anpasselement erfolgt wiederum eine Ablenkung in einen Strahlengang parallel zur Drehachse. Durch die zweifache radiale Ablenkung, zuerst nach innen und danach nach aussen, verläuft der Strahl wieder auf einer Position mit dem ursprünglichen Radius und kann in einen entsprechenden zweiten Lichtwellenleiter 3 durch Kollimatoren eingekoppelt werden.

Das vorliegende Beispiel bezieht sich auf eine Ausführungsform, bei der die Materialien der Anpasselemente der Kollimatoranordnungen und der Prismen-Anpasselemente den gleichen Brechungsindex aufweisen. Weiterhin sind die Abstände zwischen der ersten Kollimatoranordnung mit Anpasselement 10 und dem ersten Prismen-Anpasselement 11 sowie zwischen dem zweiten Prismen-Anpasselement 12 und der zweiten Kollimatoranordnung mit Anpasselement 13 gleich. Grundsätzlich können auch Materialien mit unterschiedlichen Brechungsindizes eingesetzt werden. Hierbei sind dann aber die Winkel der Kegelmantelflächen entsprechend anzupassen, so dass die Ausbreitung der Lichtstrahlen im inneren der Prismen Anpasselemente parallel zu den in die Kollimatoranordnungen eingekoppelten Lichtstrahlen verläuft. Ebenso wäre auch eine Anpassung durch Variation der Abstände zwischen einer Kollimatoranordnung und einem Prismen-Anpasselement möglich. Das hier dargestellte Beispiel stellt eine bevorzugte Ausführungsform dar. Ebenso können gemäss einer Ausführungsform, die Kein Teil der Erfindung ist, aber auch nur an einer Seite der Anordnung Anpasselemente vorgesehen sein. So könnte beispielsweise nur auf der Seite der ersten Kollimatoranordnung ein erstes Anpasselement 10 sowie ein zugehöriges Prismen-Anpasselement 11 vorgesehen sein, während die zweite Seite der Anordnung ohne Anpasselemente realisiert ist. Alternativ können auch gemäss einer Ausführungsform, die Kein Teil der Erfindung ist, nur Anpasselemente 10 und 13 an den Kollimatoren vorgesehen sein, während am Prisma keine Prismen-Anpasselemente vorhanden sind. Durch den schrägen Lichteintritt in das Prisma selbst ergibt sich ohnehin dort eine niedrige Reflexion. In einer weiteren alternativen Ausgestaltung, die Kein Teil der Erfindung ist, können auch ausschließlich Prismen-Anpasselemente 11 und 12 vorgesehen sein, während an den Kollimatoren keine Anpasselemente vorhanden sind.

Figur 2 zeigt in schematischer Form Anordnung entsprechend dem stand der Technik. Der optische Drehübertrager umfasst eine erste Kollimatoranordnung 4 zur Ankopplung von ersten Lichtwellenleitern 2, sowie eine zweite Kollimatoranordnung 5 zur Ankopplung von zweiten Lichtwellenleitern 3. Die zweite Kollimatoranordnung 5 ist gegenüber der ersten Kollimatoranordnung 4 um die Drehachse 6 drehbar gelagert. Zur Kompensation der Drehbewegung befindet sich im Strahlengang zwischen der ersten Kollimatoranordnung 4 und der zweiten Kollimatoranordnung 5 ein derotierendes Element in Form eines Dove-Prismas 1. Der beispielhafte Strahlengangs eines Lichtstrahls 9 ist ausgehend von ersten Lichtwellenleitern 2 über die erste Kollimatoranordnung 4, durch das Dove-Prisma 1, über die zweite Kollimatoranordnung 5 bis in die zweiten Lichtwellenleiter 3 dargestellt.

Figur 3 zeigt in schematischer Form eine weitere erfindungsgemäße Anordnung im Schnitt. Die Abbildung entspricht weitgehend derjenigen aus Figur 1. Abweichend hiervon sind jedoch die erste Kollimatoranordnung mit Anpasselement 10 sowie die zweite Kollimatoranordnung mit Anpasselement 13 an ihrem zum Prisma 1 weisenden Seiten Kegelförmig ausgebildet, wobei die Kegel in die Flächen der Kollimatoranordnungen hineinragen. Entsprechend sind die zu den Kollimatoranordnungen weisenden Flächen der Prismen-Anpasselemente 11, 12 invers zu dem zugeordneten Anpasselementen der Kollimatoranordnungen ausgeführt. In diesem Falle sind kegelförmige Endflächen ausgebildet, welche nach außen in Richtung der Kollimatoranordnungen weisen.

Figur 4 zeigt in schematischer Form eine weitere erfindungsgemäße Anordnung im Schnitt, bei der die Anpasselemente in Form von Fresnel-Linsen ausgeführt sind. Im Gegensatz zu echten Fresnel-Linsen sind die einzelnen Segmente nicht gewölbt, vielmehr stellen diese KegelSegmente dar. Auch hier sind die Geometrien in der Prismen-Anpasselemente invers zu denjenigen der Anpasselemente der Kollimatoranordnungen.

Figur 5 zeigt eine weitere Ausführung einer erfindungsgemäßen Anordnung, bei der zusätzliche Zwischenelemente 14, 15 zwischen den Kollimatoranordnungen 10, 13 und den Prismen-Anpasselementen 11, 12 vorgesehen sind. Es wird hierbei ähnlich wie in Figur 1 zunächst ein Lichtstrahl kommend von der ersten Kollimatoranordnung mit Anpasselement 10 beim Übergang in ein erstes Zwischenelement 14 radial in Richtung der Rotationsachse versetzt. Bei dem zweiten Übergang von dem ersten Zwischenelement 14 in das erste Prismen-Anpasselement 11 wird der Lichtstrahl wieder in die ursprüngliche radialer Position gebracht. Der Lichtstrahl breitet sich nun in gleicher Achse in dem ersten Prismen-Anpasselement 11 wie in der ersten Kollimatoranordnung mit Anpasselement 10 aus. Die Voraussetzung hierfür ist die Anpassung der Brechungsindizes der ersten Kollimatoranordnung mit Anpasselement 10, des ersten Zwischenelement 14 und des ersten Prismen-Anpasselement 11 unter Berücksichtigung der Abstände zwischen diesen Elementen. Vorzugsweise sind die Brechungsindizes gleich und die Abstände ebenfalls gleichgroß. Da der Lichtstrahl, der in das Prisma 1 eintritt, die gleiche Achse hat wie der selbe Lichtstrahl in der ersten Kollimatoranordnung mit Anpasselement 10, ist eine Korrektur auf der anderen Seite des Prismas nicht möglich. Vorteilhafterweise kann hier jedoch eine identische Anordnung angebracht werden. Weiterhin könnte auch der Anordnung auf einer Seite des Prismas ein gewisser Strahlversatz im Prisma erzeugt werden, der durch die Anordnung auf der anderen Seite wieder kompensiert wird. Dieser Effekt kann zur Temperaturkompensation der Anordnung ausgenutzt werden.

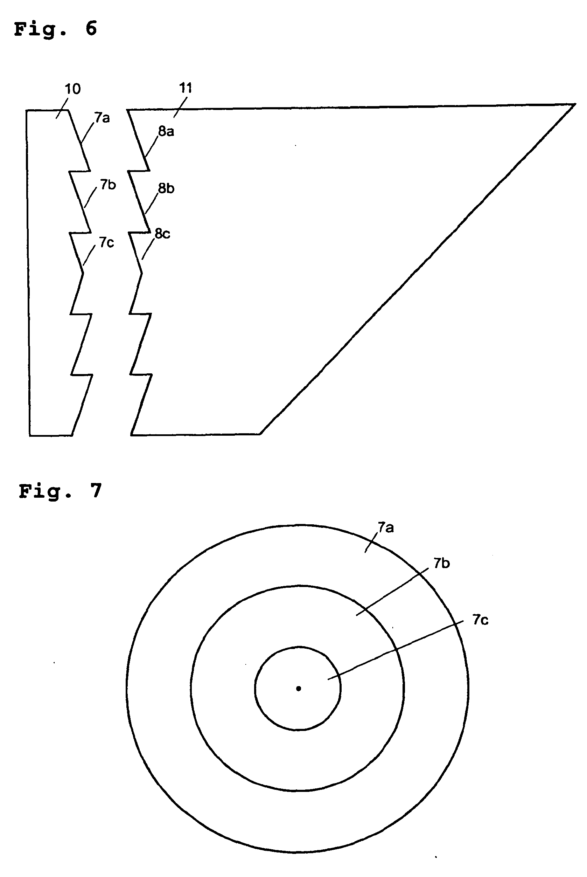

Figur 6 zeigt ein Detail aus Figur 4 in vergrößerter Darstellung. Hierin sind die Kegelmantelflächen 7a, 7b und 7c der ersten Kollimatoranordnung mit Anpasselement 10 entsprechend dem seitlichen Schnitt längs der Drehachse 6 sichtbar. Ebenso ist das mit inverser Oberflächenkontur ausgebildete erste Prismen-Anpasselement 11 mit den in entgegengesetzter Richtung verlaufenden Kegelmantelflächen 8a, 8b und 8c erkennbar. Besonders gut ist hier der Unterschied zu Fresnel-Linsen erkennbar. So sind die Konturen der Kegelmantelflächen gerade, während die Konturen bei Fresnel-Linsen eine Krümmung entsprechend der Linsenkontur aufweisen würden. Grundsätzlich können auch Anordnungen mit einer anderen Anzahl von Kegelflächen beziehungsweise Kegelmantelflächen verwendet werden. Ebenso können wahlweise auf jeder Seite der Anordnung hineinragende oder herausragende Kegelmantelflächen eingesetzt werden. Grundvoraussetzung für das Funktionieren der Erfindung ist immer, dass die Kegelmantelflächen der Kollimatoranordnungen und der Prismen-Anpasselemente invers zu einander sind.

Figur 7 zeigt eine Draufsicht auf die erste Kollimatoranordnung mit Anpasselement 10 aus Figur 5. Hier sind die Kegelmantelflächen 7a, 7b und 7c entsprechend der Projektion in der Draufsicht als kreisförmige Scheiben zu erkennen.

### Bezugszeichenliste

- 1: Derotierendes optisches Element
- 2: Erste Lichtwellenleiter
- 3: Zweite Lichtwellenleiter
- 4: Erste Kollimatoranordnung
- 5: Zweite Kollimatoranordnung
- 6: Drehachse
- 7a: Kegelfläche
- 7b: Kegelfläche
- 7c: Kegelfläche
- 8a: Kegelfläche
- 8b: Kegelfläche
- 8c: Kegelfläche
- 9: Lichtstrahl
- 10: Erste Kollimatoranordnung mit Anpasselement
- 11: Erstes Prismen-Anpasselement
- 12: Zweites Prismen-Anpasselement
- 13: Zweite Kollimatoranordnung mit Anpasselement
- 14: Erstes Zwischenelement
- 15: Zweites Zwischenelement

## Patentansprüche

1. Optischer Drehübertrager umfassend wenigstens eine erste Kollimatoranordnung (4) zur Ankopplung von ersten Lichtwellenleitern (2) sowie eine zweite Kollimatoranordnung (5) zur Ankopplung von zweiten Lichtwellenleitern (3), welche gegenüber der ersten Kollimatoranordnung (4) um eine Drehachse (6) drehbar gelagert ist, sowie ein derotierendes optisches Element (1), welches sich im Lichtpfad zwischen der ersten Kollimatoranordnung (4) und der zweiten Kollimatoranordnung (5) befindet, wobei ein erstes Prismen-Anpasselement (11) und ein zweites Prismen-Anpasselement (12) an jeweils einer Seite des derotierenden optischen Elements (1) angeordnet sind,
**dadurch gekennzeichnet, dass**
die Kollimatoranordnungen (4, 5) Anpasselemente (10, 13) aufweisen, welche in ihrer dem derotierenden optischen Element zugewandten Seite wenigstens eine um die Drehachse (6) rotationssymmetrische Kegelmantelfläche umfassen, und die Prismen-Anpasselemente (11, 12) dazu inverse Flächen, umfassend wenigstens eine um die Drehachse (6) rotationssymmetrische Kegelmantelfläche in entgegengesetzter Richtung, aufweisen.

2. Optischer Drehübertrager umfassend wenigstens eine erste Kollimatoranordnung (4) zur Ankopplung von ersten Lichtwellenleitern (2) sowie eine zweite Kollimatoranordnung (5) zur Ankopplung von zweiten Lichtwellenleitern (3), welche gegenüber der ersten Kollimatoranordnung (4) um eine Drehachse (6) drehbar gelagert ist, sowie ein derotierendes optisches Element (1), welches sich im Lichtpfad zwischen der ersten Kollimatoranordnung (4) und der zweiten Kollimatoranordnung (5) befindet, wobei ein erstes Prismen-Anpasselement (11) und ein zweites Prismen-Anpasselement (12) an jeweils einer Seite des derotierendes optisches Elements (1) angeordnet sind,
**dadurch gekennzeichnet, dass**
die Kollimatoranordnungen (4,5) Anpasselemente (10, 13) aufweisen, welche in ihrer dem derotierenden optischen Element zugewandten Seite wenigstens eine um die Drehachse (6) rotationssymmetrische Kegelmantelfläche umfassen, die Prismen-Anpasselemente (11, 12) in ihrer den Kollimatoranordnungen (4,5) zugewandten Seite wenigstens eine um die Drehachse (6) rotationssymmetrische Kegelmantelfläche in entgegengesetzter Richtung aufweisen und dass zusätzliche Zwischenelemente (14, 15) zwischen den Kollimatoranordnungen (4,5) und den Prismen-Anpasselementen (11, 12) vorgesehen sind, wobei die Zwischenelemente (14, 15) jeweils zu den Anpasselementen (10,13) der Kollimatoranordnungen (4,5) und zu den PrismenAnpasselementen (11, 12) inverse Flächen, umfassend wenigstens eine um die Drehachse (6) rotationssymmetrische Kegelmantelfläche in entgegengesetzter Richtung, aufweisen.

3. Vorrichtung nach Anspruch 1 oder 2,
**dadurch gekennzeichnet, dass**
das derotierende optische Element (1) ein Dove-Prisma ist.

4. Vorrichtung nach Anspruch 1 oder 2,
**dadurch gekennzeichnet, dass**
das derotierende optische Element (1) ein Abbe-König Prisma ist.

5. Vorrichtung nach Anspruch 1, oder Anspruch 3 oder 4, wenn von Anspruch 1 abhängig,
**dadurch gekennzeichnet, dass**
die Anpasselemente (10, 13) der Kollimatoranordnungen (4, 5) Kegelmantelflächen aufweisen, die aus den Kollimatoranordnungen in Richtung des derotierenden optischen Elements (1) herausragen, und die Prismen-Anpasselemente (11, 12) Kegelmantelflächen aufweisen, die in die Anpasselemente in Richtung des derotierenden optischen Elements (1) hineinragen.

6. Vorrichtung nach Anspruch 1, oder Anspruch 3 oder 4, wenn von Anspruch 1 abhängig,
**dadurch gekennzeichnet, dass**
die Anpasselemente (10, 13) der Kollimatoranordnungen (4, 5) Kegelmantelflächen aufweisen, die in die Kollimatoranordnungen in Richtung der Lichtwellenleiter (2, 3) hineinragen, und die Prismen-Anpasselemente (11, 12) Kegelmantelflächen aufweisen, die aus denen Anpasselementen in Richtung der Kollimatoranordnungen (4, 5) herausragen.

7. Vorrichtung nach Anspruch 1,
**dadurch gekennzeichnet, dass**
die Anpasselemente (10, 13) der Kollimatoranordnungen (4, 5) mehrere Kegelmantelflächen aufweisen, und die Prismen-Anpasselemente (11, 12) die gleiche Anzahl von Kegelmantelflächen aufweisen.

8. Vorrichtung nach einem der vorhergehenden Ansprüche,
**dadurch gekennzeichnet, dass**
die Anpasselemente (10, 13) der Kollimatoranordnungen (4, 5) als getrenntes Bauteil ausgeführt sind.

9. Vorrichtung nach einem der Ansprüche 1 bis 7,
**dadurch gekennzeichnet, dass**
die Anpasselemente (10, 13) der Kollimatoranordnungen in die Kollimatoranordnungen (4, 5) integriert sind.

10. Vorrichtung nach Anspruch 9,
**dadurch gekennzeichnet, dass**
die Kollimatoranordnungen (4, 5) als Mikrooptisches System, insbesondere als Mikrolinsen-Array ausgebildet sind, welche auf der dem derotierenden optischen Element (1) zugewandte Seite die Form von der Anpasselementen (10,13) aufweisen.

## Claims

1. Optical rotating data transmission device, comprising at least one first collimator arrangement (4) for coupling-on first light-waveguides (2), and also a second collimator arrangement (5) for coupling-on second light-waveguides (3), which is supported to be rotatable relative to the first collimator arrangement (4) about a rotation axis (6), and also a derotating optical element (1) which is located in the light path between the first collimator arrangement (4) and the second collimator arrangement (5), with a first prism-adapting element (11) and a second prism-adapting element (12) being disposed respectively on each side of the one derotating optical element (11),
**characterized in that**
the collimator arrangements (4, 5) are provided with adapting elements (10, 13) which comprise on their side facing the derotating optical element at least one cone-envelope surface that is rotationally symmetrical about the rotation axis (6), and the prism-adapting elements (11, 12) have surfaces inverse thereto which comprise at least one cone-envelope surface that is rotationally symmetrical about the rotation axis (6) and which face in the opposite direction.

2. Optical rotating data transmission device, comprising at least one first collimator arrangement (4) for coupling-on first light-waveguides (2), and also a second collimator arrangement (5) for coupling-on second light-waveguides (3), which is supported to be rotatable relative to the first collimator arrangement (4) about a rotation axis (6), and also a derotating optical element (1) which is located in the light path between the first collimator arrangement (4) and the second collimator arrangement (5), with a first prism-adapting element (11) and a second prism-adapting element (12) being disposed respectively on each side of the one derotating optical element (11),
**characterized in that**
the collimator arrangements (4, 5) are provided with adapting elements (10, 13) which comprise on their side facing the derotating optical element at least one cone-envelope surface that is rotationally symmetrical about the rotation axis (6), the prism-adapting elements (11, 12) have on their side facing the collimator arrangements (4, 5) at least one cone-envelope surface that is rotationally symmetrical about the rotation axis (6) in an opposite direction and additional intermediate elements (14, 15) are provided between the collimator arrangements (4, 5) and the prism-adapting elements (11, 12), wherein the intermediate elements (14, 15) have inverse surfaces to the adapting elements (10, 13) of the collimator arrangements (4, 5) and to the prism-adapting elements (11, 12), comprising at least one cone-envelope surface that is rotationally symmetrical about the rotation axis (6) and which face in the opposite direction.

3. Device according to claim 1 or 2,
**characterized in that**
the derotating optical element (1) is a Dove prism.

4. Device according to claim 1 or 2,
**characterized in that**
the derotating element (1) is an Abbe-König prism.

5. Device according to claim 1, or claim 3 or 4, when dependent from claim 1,
**characterized in that**
the adapting elements (10, 13) of the collimator arrangements (4, 5) are provided with adapting elements having cone-envelope surfaces which project outwards from the collimator arrangements in the direction towards the derotating optical element (1), and the prism-adapting elements (11, 12) have cone-envelope surfaces which project inwards into the adapting elements in the direction of the derotating optical element (1).

6. Device according to claim 1, or claim 3 or 4, when dependent from claim 1,
**characterized in that**
the adapting elements (10, 13) of the collimator arrangements (4, 5) are provided with adapting elements having cone-envelope surfaces which project inwards into the collimator arrangements in the direction towards the light-waveguides (2, 3), and the prism-adapting elements (11, 12) have cone-envelope surfaces which project outwards from the adapting elements in the direction of the collimator arrangements (4, 5).

7. Device according to claim 1,
**characterized in that**
the adapting elements (10, 13) of the collimator arrangements (4, 5) are provided with a plurality of cone-envelope surfaces, and the prism-adapting elements (11, 12) have the same number of cone-envelope surfaces.

8. Device according to any one of the preceding claims,
**characterized in that**
the adapting elements (10, 13) of the collimator arrangements (4, 5) are provided with separate adapting elements.

9. Device according to any one of the claims 1 to 7,
**characterized in that**
the adapting elements (10, 13) of the collimator arrangements (4, 5) are incorporated in the collimator arrangements (4, 5).

10. Device according to claim 9,
**characterized in that**
the collimator arrangements (4, 5) are designed as micro-optical systems, in particular as micro-lens arrays, which are formed as adapting elements (10, 13) on the side facing the derotating optical element (1).

## Revendications

1. Transmetteur optique rotatif comprenant au moins un premier dispositif de collimateur (4) pour le couplage de premiers guides d'ondes lumineuses (2) ainsi qu'un deuxième dispositif de collimateur (5) pour le couplage de deuxièmes guides d'ondes lumineuses (3), qui est supporté face au premier dispositif de collimateur (4) avec possibilité de rotation autour d'un axe de rotation (6), ainsi qu'un élément optique de rotation inversée (1) qui se trouve sur le trajet de la lumière entre le premier dispositif de collimateur (4) et le deuxième dispositif de collimateur (5), un premier élément adaptateur de prisme (11) et un deuxième élément adaptateur de prisme (12) étant disposés chacun d'un côté de l'élément optique de rotation inversée (1),
**caractérisé en ce que** les dispositifs de collimateur (4, 5) présentent des éléments adaptateurs (10, 13) qui comportent sur leur côté orienté vers l'élément optique de rotation inversée au moins une surface d'enveloppe conique symétrique en rotation autour de l'axe de rotation (6), et les éléments adaptateurs de prisme (11, 12) présentent des surfaces inverses de celle-ci, comprenant au moins une surface d'enveloppe conique symétrique en rotation autour de l'axe de rotation (6) dans le sens opposé.

2. Transmetteur optique rotatif comprenant au moins un premier dispositif de collimateur (4) pour le couplage de premiers guides d'ondes lumineuses (2) et un deuxième dispositif de collimateur (5) pour le couplage de deuxièmes guides d'ondes lumineuses (3), qui est supporté face au premier dispositif de collimateur (4) avec possibilité de rotation autour d'un axe de rotation (6), ainsi qu'avec un élément optique de rotation inversée (1) qui se trouve dans le trajet de la lumière entre le premier dispositif de collimateur (4) et le deuxième dispositif de collimateur (5), un premier élément adaptateur de prisme (11) et un deuxième élément adaptateur de prisme (12) étant disposés chacun d'un côté de l'élément optique de rotation inversée (1),
**caractérisé en ce que**
les dispositifs de collimateur (4, 5) présentent des éléments adaptateurs (10, 13) qui comportent sur leur côté orienté vers l'élément optique de rotation inversée au moins une surface d'enveloppe conique symétrique en rotation autour de l'axe de rotation (6), les - éléments adaptateurs de prisme (11, 12) présentent sur leur côté orienté vers les dispositifs de collimateur (4, 5) au moins une surface d'enveloppe conique symétrique en rotation autour de l'axe de rotation (6) dans le sens opposé et **en ce que** des éléments intermédiaires (14, 15) supplémentaires sont prévus entre les dispositifs de collimateur (4, 5) et les éléments adaptateurs de prisme (11, 12), les éléments intermédiaires (14, 15) présentant des surfaces inverses des éléments adaptateurs (10, 13) des dispositifs de collimateur (4, 5) et des éléments adaptateurs de prisme (11, 12), comprenant au moins une surface d'enveloppe conique symétrique en rotation autour de l'axe de rotation (6) dans des directions opposées.

3. Dispositif selon la revendication 1 ou 2, **caractérisé en ce que** l'élément optique de rotation inversée (1) est un prisme de Dove.

4. Dispositif selon la revendication 1 ou 2, **caractérisé en ce que** l'élément optique de rotation inversée (1) est un prisme d'Abbe-König.

5. Dispositif selon la revendication 1 ou selon la revendication 3 ou 4 quand elle est dépendante de la revendication 1, **caractérisé en ce que** les éléments adaptateurs (10, 13) des dispositifs de collimateur (4, 5) présentent des surfaces d'enveloppe coniques qui dépassent des dispositifs de collimateur en direction de l'élément optique de rotation inversée (1) et les éléments adaptateurs de prisme (11, 12) présentent des surfaces d'enveloppe coniques qui dépassent dans les éléments adaptateurs en direction de l'élément optique de rotation inversée (1).

6. Dispositif selon la revendication 1 ou selon la revendication 3 ou 4 quand elle est dépendante de la revendication 1, **caractérisé en ce que** les éléments adaptateurs (10, 13) des dispositifs de collimateur (4, 5) présentent des surfaces d'enveloppe coniques qui dépassent dans les dispositifs de collimateur en direction des guides d'ondes lumineuses (2, 3) et les éléments adaptateurs de prisme (11, 12) présentent des surfaces d'enveloppe coniques qui dépassent des éléments adaptateurs en direction des dispositifs de collimateur (4, 5).

7. Dispositif selon la revendication 1, **caractérisé en ce que** les éléments adaptateurs (10, 13) des dispositifs de collimateur (4, 5) présentent plusieurs surfaces d'enveloppe coniques et les éléments adaptateurs de prisme (11, 12) présentent le même nombre de surfaces d'enveloppe coniques.

8. Dispositif selon l'une des revendications précédentes, **caractérisé en ce que** les éléments adaptateurs (10, 13) des dispositifs de collimateur (4, 5) sont réalisés comme un composant séparé ;

9. Dispositif selon l'une des revendications 1 à 7, **caractérisé en ce que** les éléments adaptateurs (10, 13) des dispositifs de collimateur sont intégrés dans les dispositifs de collimateur (4, 5).

10. Dispositif selon la revendication 9, **caractérisé en ce que** les dispositifs de collimateur (4, 5) sont conçus comme un système micro-optique, en particulier comme une matrice de microlentilles qui présentent la forme des éléments adaptateurs (10, 13) du côté faisant face à l'élément optique de rotation inversée (1).
